Europäisches Patentamt

European Patent Office

Office européen des brevets

(19)

(11) Veröffentlichungsnummer : **0 082 171**
**B1**

(12) EUROPÄISCHE PATENTSCHRIFT

(45) Veröffentlichungstag der Patentschrift :
09.10.85

(51) Int. Cl.⁴ : **B 05 D 7/14, C 09 D 5/08**

(21) Anmeldenummer : 82901968.6

(22) Anmeldetag : 24.06.82

(86) Internationale Anmeldenummer :
PCT/EP 82/00131

(87) Internationale Veröffentlichungsnummer :
WO/8300105 (20.01.83 Gazette 83/02)

(54) VERFAHREN ZUR HERSTELLUNG VON KORROSIONSSCHUTZSCHICHTEN AUF METALLISCHEN OBERFLÄCHEN.

(30) Priorität : 26.06.81 DE 3125113

(43) Veröffentlichungstag der Anmeldung :
29.06.83 Patentblatt 83/26

(45) Bekanntmachung des Hinweises auf die Patenterteilung : 09.10.85 Patentblatt 85/41

(84) Benannte Vertragsstaaten :
AT BE CH FR GB LI LU NL SE

(56) Entgegenhaltungen :
DE-A- 2 256 962
DE-A- 2 712 903
US-A- 2 927 089
KUNSTSTOFF-LEXIKON, 7. Aufl. Hanser Verlag, (S.
526-527)

(73) Patentinhaber : Battelle-Institut e.V.
Am Römerhof 35 Postfach 900 160
D-6000 Frankfurt/Main 90 (DE)

(72) Erfinder : DEIBIG, Heinrich
Priessnitzstrasse 13
D-6000 Frankfurt/Main (DE)
Erfinder : WOLLMANN, Klaus
Bahnhofstrasse 33
D-6250 Limburg 7 (DE)

(74) Vertreter : Rupprecht, Klaus, Dipl.-Ing.
Am Römerhof 35
D-6000 Frankfurt (Main) 90 (DE)

**Beschreibung**

Die Erfindung betrifft ein Verfahren zur Herstellung von Korrosionsschutzschichten auf metallischen Oberflächen, bei dem monomere Phenole und niedermolekulare Kondensationsprodukte des Formaldehyds mit Ammoniak oder Aminen auf die vorbehandelte Oberfläche aufgebracht und in der Hitze ausgehärtet werden.

Nach den herkömmlichen Verfahren werden Metalloberflächen durch Lackieren, Tauchen, Besprühen, Pulverauftragung oder dergleichen mit fertigen Polymeren beschichtet. Mit Phenol/Formaldehyd-Kondensationsprodukten lassen sich jedoch durch diese Methoden nur relativ dicke Schichten aufbringen, die zudem nicht porenfrei sind.

Aus der DE-PS 27 12 903 ist bekannt, daß dünne Korrosionsschutzschichten bestehend aus Kondensationsprodukten von Phenolen mit niedermolekularen Kondensationsprodukten des Formaldehyds mit Ammoniak oder Aminen aus der Gasphase auf Metalloberflächen hergestellt werden können. Dabei wird infolge des Aufdampfvorgangs eine sehr homogene Verteilung der Einzelkomponenten auf der Metalloberfläche erhalten, woraus beim Härten eine porenfreie Beschichtung resultiert. Der wesentliche Nachteil dieses Verfahrens ist jedoch, daß ein apparativer Aufwand erforderlich ist und daß nur gut kühlbare Flächen beschichtet werden können.

Der vorliegenden Erfindung liegt die Aufgabe zugrunde, diese Nachteile zu überwinden und ein Verfahren zu entwickeln, mit dem dünne und porenfreie Beschichtungen auf der Basis von Phenol/Formaldehyd-Kondensationsprodukten auf Metalloberflächen hergestellt werden können.

Es hat sich gezeigt, daß sich diese Aufgabe mit einem Verfahren der eingangs genannten Art lösen läßt, wenn man ein Gemisch der Ausgangsstoffe zusammen mit einem, gegenüber mindestens einem Ausgangsstoff chemisch reaktiven Tensid aus der Lösung, Dispersion oder als Pulver auf die zu beschichtende Oberfläche aufbringt. Die vorteilhaften Weiterbildungen des erfindungsgemäßen Verfahrens sind in den Unteransprüchen 2 bis 5 erläutert.

Als Phenolkomponente des Monomeren-Gemisches können erfindungsgemäß substituierte oder nicht substituierte Phenole verwendet werden z. B. Phenol, Bisphenol A, m-Kresol, 3,5-Dimethylphenol, m-Chlorphenol, Salicylaldehyd, m-Isopropenylphenol, Resorcin und 4,4'-Diphenylol. Die Phenolverbindungen können sowohl einzeln als auch in Mischung verwendet werden. Vorzugsweise wird Bisphenol A eingesetzt.

Als Formaldehyd/Amin-Kondensationsprodukte kommen z. B. in Betracht Hexamethylentetramin, Bis-(dimethylamino)-methan, das Kondensationsprodukt aus 1 Mol Phenol, 3 Mol Formaldehyd und 3 Mol Dimethylamin (2,4,6-Trisdimethylaminophenol) und dergleichen sowie Gemische von Formaldehydkondensationsprodukten. Vorzugsweise wird Hexamethylentetramin verwendet.

Das Mischungsverhältnis von Phenolkomponente zu dem Formaldehyd-Kondensationsprodukt kann in weiten Grenzen variieren ; bevorzugt werden jedoch Mischungen, die aus 50 bis 95 Gew.-% Phenolkomponente bestehen.

Um eine möglichst homogene Mischung von pulverförmig vorliegenden Ausgangsmaterialien zu erhalten, kann das Pulvergemisch vor der Applikation zusammengeschmolzen und erneut pulverisiert werden.

Eine homogene Verteilung der phenolischen Verbindungen und der Formaldehyd-Kondensationsprodukte auf der zu beschichtenden Metalloberfläche wird erfindungsgemäß mit Netzmitteln erreicht. Es hat sich jedoch gezeigt, daß normale Netzmittel, die z. B. im Kunststoff Lexakon, 7, Aufl., K. Stoeckert, Carl Hauser Verlag, beschrieben sind, die Haftung der Schutzschichten auf dem Metall stark herabsetzen. Erst wenn man als Netz- bzw. Spreitmittel reaktive Tenside einsetzt, die beim Einbrennvorgang in die Schutzschicht mit einkondensiert werden, wird eine sehr gute Haftung erzielt. Solche Netzmittel bewirkten zudem eine homogene Verteilung der Einzelkomponenten auf der Metalloberfläche. In Betracht kommen hierfür insbesondere Fettamine, Fettsäureamide, Fettsäurealkanolamide, kondensierte Amine, Polyamine, Eiweißampholyte und dergleichen sowie hydroxylgruppenhaltige Produkte. Solche oberflächenaktive Verbindungen reagieren mit einer oder mit beiden Ausgangskomponenten. Die Tenside werden dem Phenol/Formaldehyd-Kondensatgemisch in einer Menge von 0,01 bis 10 Gew.% hinzugefügt.

Die Härtung des Gesamtgemischs, das aus Lösung, Dispersion oder als Pulver auf die Metalloberfläche aufgebracht wird, erfolgt durch Erhitzen auf 100 bis 250 °C, vorzugsweise auf 150 bis 200 °C.

In den nachfolgenden Beispielen wird das erfindungsgemäße Verfahren näher erläutert.

Beispiel 1

Eine Mischung von 10 Gew.-Teilen Bisphenol A und 1,5 Gew.-Teilen Hexamethylentetramin und 0,5 Gew.-Teilen eines Fettamins wird in einer Lösung aus 80 Volumenteilen Äthanol und 20 Volumenteilen 3 %iger Ammoniaklösung aufgelöst. In diese Lösung wird ein entfettetes und phosphatiertes Eisenblech getaucht, dann bei 80 °C Minuten getrocknet und anschließend 1 Stunde lang auf 180 °C erhitzt. Die so erhaltene Beschichtung hat folgende Eigenschaften :
Dicke : 60 µm
Bleistifthärte : 1 bis 2
Gitterschnitt (DIN 53161) : Gt 0 bis Gt 1
Dornbiegefestigkeit
(DIN 53151, 10 mm-Dorn) : +
Porosität (DIN 53161) : P1 bis P2

**Beispiel 2**

Ein auf 160 °C erhitztes entfettetes und phosphatiertes Eisenrohr wird in ein Feinpulveriges Gemisch aus 100 Gew.-Teilen Bisphenol A, 20 Gew.-Teilen Hexamethylentetramin und 3 Gew.-Teilen eines Fettsäureamids getaucht und danach durch einstündiges Erhitzen auf 170 °C der pulverförmige Uberzug zu einer glatten, festhaftenden Beschichtung mit folgenden Eigenschaften ausgehärtet :

Dicke : 50 µm
Bleistifthärte : 1 bis 2
Gitterschnitt (DIN 53191) : Gt 0 bis Gt 1
Porosität (DIN 53161) : P1 bis P2

Die Beschichtung zeigte nach dreimonatigem Kochen in Meerwasser keine Korrosionserscheinungen

**Beispiel 3**

50 g Bisphenol A und 5 g Hexamethylentetramin wurden bei 130 °C zusammengeschmolzen, nach dem Abkühlen pulverisiert und auf eine Korngröße 10 µm gesiebt.

Ein entfettetes Eisenblech wurde in eine 1 %ige Lösung eines amterminierten Flüssigkautschuks (Hycar ATBN) getaucht und nach dem Trocknen elektrostatisch mit dem pulverisierten und gesiebten Schmelzpulver beschichtet.

Es wurde 15 min lang bei 150 bis 200 °C (ansteigende Temperatur) gehärtet, wobei eine festhaftende, glatte Schicht mit folgenden Eigenschaften erhalten wurde :

Dicke : 30 µm
Bleistifthärte : 1 bis 2
Gitterschnitt (DIN 53191) : Gt 0 bis Gt 1
Porosität (DIN 53161) : P1

**Patentansprüche**

1. Verfahren zur Herstellung von Korrosionsschutzschichten auf metallischen Oberflächen, bei dem monomere Phenole und niedermolekulare Kondensationsprodukte des Formaldehyds mit Ammoniak oder Aminen auf die vorbehandelte Oberfläche aufgebracht und in der Hitze ausgehärtet werden, dadurch gekennzeichnet, daß man ein Gemisch der Ausgangsstoffe zusammen mit einem gegenüber mindestens einem Ausgangsstoff chemisch reaktiven Tensid aus Lösung, Dispersion oder als Pulver auf die zu beschichtende Oberfläche aufbringt.

2. Verfahren nach Anspruch 1, dadurch gekennzeichnet, daß als Tenside Fettamine, Fettsäureamide, Fettsäurealkanolamide, kondensierte Amine, Polyamine oder Eiweißampholyte verwendet werden.

3. Verfahren nach Anspruch 1 oder 2, dadurch gekennzeichnet, daß der Anteil der Phenolkomponente in der Mischung 50 bis 95 Gew.% beträgt.

4. Verfahren nach einem der Ansprüche 1 bis 3, dadurch gekennzeichnet, daß der Anteil des Tensids in der Mischung 0,01 bis 10 Gew.-% beträgt.

5. Verfahren nach einem der Ansprüche 1 bis 4, dadurch gekennzeichnet, daß als Phenolkomponente Bisphenol A und als Formaldehydkondensationsprodukt Hexamethylentetramin, vorzugsweise in einem Mischungsverhältnis von 4 : 1, verwendet wird.

**Claims**

1. Method for the production of corrosion inhibiting coatings on metallic surfaces by applying monomeric phenols and low molecular condensation products of formaldehyde with ammonia or amines onto the pretreated surface and curing by heating comprising applying a mixture of the starting materials together with a tenside, which is chemical reactive with at least one of the starting materials onto the surface to be coated, the mixture being in the form a solution, dispersion or powder.

2. Method as claimed in claim 1 wherein fatty amines, fatty acid amines, fatty acid alkanolamides, condensated amines, polyamines or protein ampholytes are used as tensides.

3. Method as claimed in claim 1 or 2 wherein the amount of phenolic component in the mixture is 50 to 95 weight per cent.

4. Method as claimed in any of the claims 1 to 3 wherein the amount of the tenside in the mixture is 0,01 to 10 weight per cent.

5. Method as claimes in any of the claims 1 to 4 wherein bisphenol A is used as the phenolic component and hexamethylene-tetramine is used as the formaldehyde condensation product the ration of bisphenol A to hexamethylenetetramine being 4 : 1.

**Revendications**

1. Procédé de fabrication de couches anticorrosives sur des surfaces métalliques pour lequel des phénols monomères et des produits de condensation de formaldéhyde à faible poids moléculaire sont appliqués avec de l'ammoniac ou des amines sur les surfaces prétraitées et durcies par la chaleur, se caractérisant par l'application de substances de base mélangées à un tensio-actif en solution, dispersion ou sous forme de poudre à réactivité chimique avec au moins l'une de ces substances de base sur la surface à enduire.

2. Procédé d'après la revendication 1, se caractérisant par l'utilisation d'amines grasses, d'amides d'acides gras, d'alcanolamides d'acides gras, d'amines condensées, de polyamines ou d'ampholytes protéiques en tant que tensioactifs.

3. Procédé d'après la revendication 1 ou 2, se caractérisant par le fait que la part des composants phénoliques du mélange varie entre 50 et 95 %-poids.

4. Procédé d'après l'une des revendications 1 à 3, se caractérisant par le fait que la part du tensioactif du mélange varie entre 0,01 et 10 %-poids.

5. Procédé d'après l'une des revendications 1 à 4, se caractérisant par l'utilisation de bisphénol A en tant que composant phénolique et d'hexaméthylène tétramine en tant que produit de condensation du formaldéhyde, de préférence sous un rapport de mélangeage de 4 : 1.